# EUROPEAN PATENT SPECIFICATION

(11) **EP 3 153 379 B1**
(45) Date of publication and mention of the grant of the patent: **06.11.2019**
(21) Application number: 15803935.4
(22) Date of filing: 11.05.2015
(51) Int. Cl.: H05B 3/18, B62D 1/04, B60R 16/027, G01L 5/22, H05B 3/20, G01L 1/14, B60R 21/015

(54) **ELECTROSTATIC GRIP DETECTION DEVICE**
ELEKTROSTATISCHE GRIFFDETEKTIONSVORRICHTUNG
DISPOSITIF DE DÉTECTION DE PRÉHENSION ÉLECTROSTATIQUE

(30) Priority: 06.06.2014 JP 2014117260
(43) Date of publication of application: 12.04.2017
(73) Proprietor: Panasonic Intellectual Property Management Co., Ltd., Osaka-shi, Osaka 540-6207 (JP)
(72) Inventor: OKAZAKI, Yuta, Osaka-shi, Osaka 540-6207 (JP); NAITOU, Hiroshi, Osaka-shi, Osaka 540-6207 (JP); FUJIKAWA, Shinji, Osaka-shi, Osaka 540-6207 (JP); NISHIO, Tsuyoshi, Osaka-shi, Osaka 540-6207 (JP); KATSUKI, Nobuharu, Osaka-shi, Osaka 540-6207 (JP)
(74) Representative: Vigand, Philippe
(86) International application number: PCT/JP2015/002367
(87) International publication number: WO 2015/186295

(56) References cited:
- EP-A1- 2 572 929
- EP-A1- 2 572 942
- DE-A1-102011 084 903
- DE-U1- 20 309 877
- JP-A- H05 345 569
- JP-A- 2002 340 712
- JP-A- 2003 018 040
- JP-A- 2010 023 699
- JP-A- 2010 076 559
- US-A1- 2013 062 329
- US-A1- 2013 098 890

## Description

### TECHNICAL FIELD

The present disclosure relates to an electrostatic grip detection device for sensing contact of a human body based on a change in electrostatic capacitance.

### BACKGROUND ART

Conventionally, methods and devices for detecting contact between a hand and a steering wheel have been proposed.

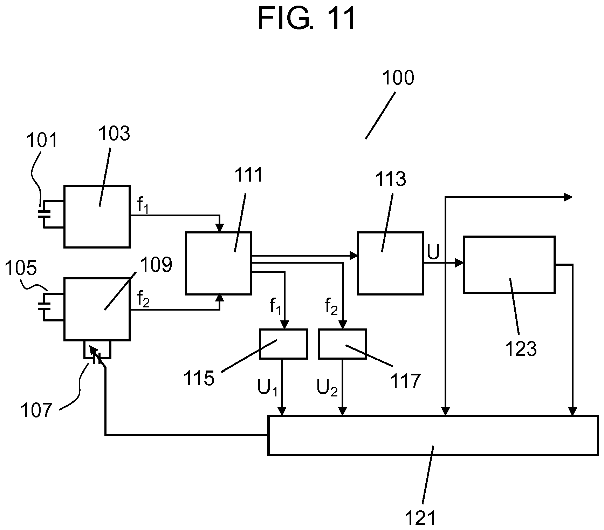

FIG. 11 is a block circuit diagram showing conventional detection device 100. A first signal of frequency f1 is generated by first oscillator 103 having first capacitance 101. First capacitance 101 is provided to a steering wheel of a vehicle.

Furthermore, a second signal of frequency f2 is generated by second oscillator 109 having second capacitance 105 and adjustable third capacitance 107. When a driver's hand is not on the steering wheel, first frequency f1 and second frequency f2 are equal to each other. Mixer 111 calculates an absolute value of a difference between first frequency f1 and second frequency f2. This absolute value is converted into output voltage U by frequency-voltage converter 113, and sent to electrostatic capacitor compensator 121 and differentiator 123. Furthermore, the first signal of frequency f1 sent from mixer 111 is converted into voltage U1 by frequency-voltage converter 115, and sent to electrostatic capacitor compensator 121. Furthermore, the second signal of frequency f2 sent from mixer 111 is converted into voltage U2 by frequency-voltage converter 117, and sent to electrostatic capacitor compensator 121.

When the driver's hand approaches the steering wheel, first capacitance 101 is influenced and first frequency f1 is changed. As the driver's hand is getting nearer to the steering wheel, voltage U is continuously increased. When the driver grips the steering wheel, voltage U exceeds a first threshold value S1, and contact between the hand and the steering wheel is detected. As the above-mentioned prior art document, PTL 1 is well known.

JP 2010 023699 discloses a touch operation determining device that is mounted on a steering of a vehicle. It comprises a heater wire that warms the steering, an oscillation section configured to impress a high-frequency signal to the heater wire, a touch electrode (at a position where the driver can perform a touch operation while gripping the steering) and a touch determining section.

### Citation List

### Patent Literature

PTL 1: Japanese Patent Application Unexamined Publication No. 2002-340712

### SUMMARY OF THE INVENTION

An electrostatic grip detection device includes a base material, a heater wire, a sensor wire, and a detection unit. The heater wire is formed in the base material. The sensor wire is formed in the base material, and has a first end electrically connected to the heater wire directly and a second end opened, for drawing out the sensor wire from the heater wire. The detection unit is electrically connected to at least one of the heater wire and the sensor wire, and senses a change in electrostatic capacitance of at least one of the heater wire and the sensor wire.

### BRIEF DESCRIPTION OF THE DRAWINGS

FIG. 1 is a schematic configuration view of an electrostatic grip detection device in accordance with a first exemplary embodiment.
FIG. 2 is a schematic view of a steering wheel with the electrostatic grip detection device placed thereon in accordance with the first exemplary embodiment.
FIG. 3 is a schematic configuration view of an electrostatic grip detection device in accordance with a second exemplary embodiment.
FIG. 4 is a schematic configuration view of an electrostatic grip detection device in accordance with a third exemplary embodiment.
FIG. 5 is a schematic configuration view of another electrostatic grip detection device in accordance with the third exemplary embodiment.
FIG. 6 is a schematic configuration view of an electrostatic grip detection device in accordance with a fourth exemplary embodiment.
FIG. 7 is a schematic configuration view of another electrostatic grip detection device in accordance with the fourth exemplary embodiment.
FIG. 8 is a schematic configuration view of an electrostatic grip detection device in accordance with a fifth exemplary embodiment.
FIG. 9 is a schematic configuration view of another electrostatic grip detection device in accordance with the fifth exemplary embodiment.
FIG. 10 is a schematic configuration view of an electrostatic grip detection device in accordance with a sixth exemplary embodiment.
FIG. 11 is a block circuit diagram of a conventional detection device.

### DESCRIPTION OF EMBODIMENTS

A conventional detection device uses a heating machine of a steering wheel as capacity in some cases. In this case, when the heating machine is disposed on the entire circumference of the steering wheel, power consumption is increased. Therefore, there has been proposed a configuration for suppressing power consumption by providing a heating machine only in a section with which a driver's hand is brought into contact. However, in such a case, since the heating machine is not disposed on the entire circumference of the steering wheel, gripping of the steering wheel cannot be detected in some sections.

Hereinafter, the present disclosure is described with reference to drawings.

### FIRST EXEMPLARY EMBODIMENT

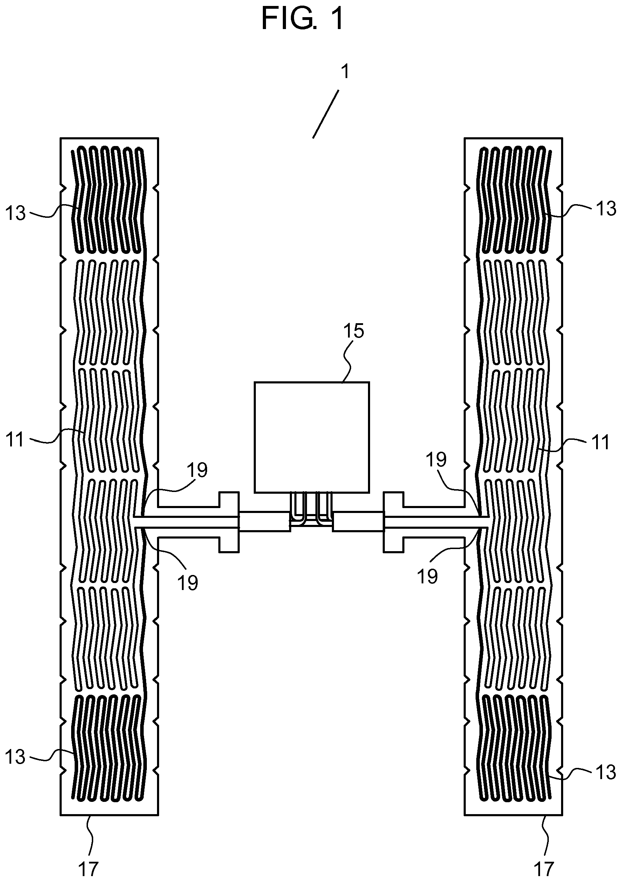

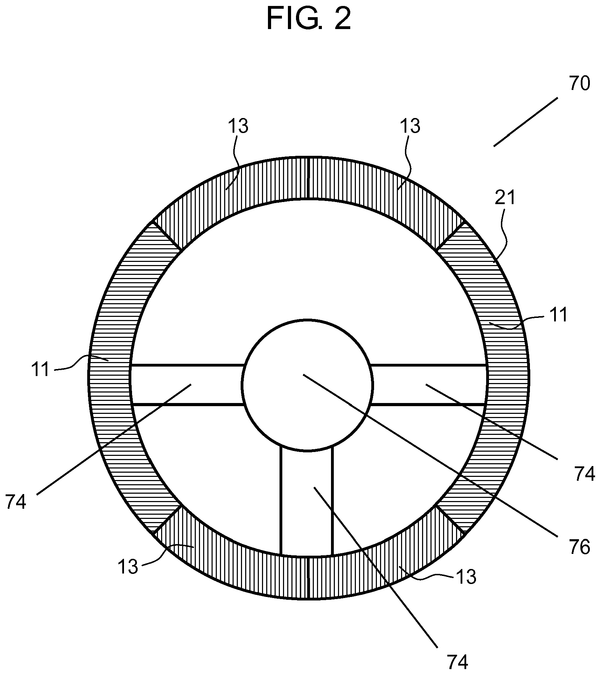

FIG. 1 is a schematic configuration view of electrostatic grip detection device 1 in accordance with a first exemplary embodiment. FIG. 2 is a schematic view of steering wheel 70 with electrostatic grip detection device 1 placed thereon in accordance with the first exemplary embodiment.

Electrostatic grip detection device 1 includes base material 17, heater wire 11, sensor wire 13, and detection unit 15. Heater wire 11 is formed in base material 17. Sensor wire 13 is formed in base material 17, and has a first end electrically connected to heater wire 11 and a second end opened. Detection unit 15 is electrically connected to at least one of heater wire 11 and sensor wire 13, and senses a change in electrostatic capacitance of at least one of heater wire 11 and sensor wire 13. Base material 17 including heater wire 11 and sensor wire 13 is wrapped around the entire circumference of grip 21 of steering wheel 70.

Note here that steering wheel 70 includes center portion 76, grip 21, and spokes 74. Grip 21 is formed around center portion 76. A driver drives a vehicle by operating grip 21. Spokes 74 link center portion 76 to grip 21.

Since one end of sensor wire 13 is opened, an electric current (a heater electric current) does not flow. Therefore, power consumption can be suppressed. Furthermore, sensor wire 13 operates as an electrode pattern for detecting a change in electrostatic capacitance. Therefore, it is possible to obtain electrostatic grip detection device 1 capable of suppressing power consumption and detecting gripping around the entire circumference of grip 21.

Hereinafter, the configuration and operation of electrostatic grip detection device 1 of the present disclosure are described more specifically.

Electrostatic grip detection device 1 includes base material 17, heater wire 11, sensor wire 13, and detection unit 15. Base material 17 is formed of a non-woven fabric. Heater wire 11 and sensor wire 13 are sewed on the non-woven fabric of base material 17. Heater wire 11 is heated by allowing an electric current to flow. Therefore, grip 21 of steering wheel 70, incorporating base material 17, functions as a grip heater. Note here that in FIG. 1, two base materials 17 are shown. Base materials 17 each having heater wire 11 and sensor wire 13 are incorporated into the right half and the left half of grip 21 of steering wheel 70 shown in FIG. 2, respectively.

As shown in FIG. 1, sensor wire 13 is drawn out from root portion 19 of heater wire 11, and disposed on both ends of heater wire 11. That is to say, a first end of sensor wire 13 is electrically connected to heater wire 11 at root portion 19. Furthermore, a second end that is not connected to root portion 19 of sensor wire 13 is opened. In FIG. 1, sensor wire 13 is shown by a thick line in order to distinguish sensor wire 13 from heater wire 11. However, in the first exemplary embodiment, a thickness (wire diameter) of sensor wire 13 is the same as a thickness (wire diameter) of heater wire 11. Furthermore, the wiring pattern of sensor wire 13 is similar to the wiring pattern of heater wire 11. Therefore, the pattern density of sensor wire 13 is the same as the pattern density of heater wire 11. Herein, the pattern density corresponds to a length of sensor wire 13 or heater wire 11 in a certain area.

A portion in which a sensor wire 13 and heater wire 11 are connected to each other is not necessarily limited to root portion 19. Sensor wire 13 may be connected to any portion of heater wire 11. For example, sensor wire 13 and heater wire 11 are drawn out to the end portion of base material 17, and they are electrically connected to each other at a section to which they are drawn. This makes it easy to sew sensor wire 13 and heater wire 11 into the non-woven fabric.

Heater wire 11 and sensor wire 13 are connected to each other at root portion 19, and electrically connected to detection unit 15 at root portion 19. Note here that detection unit 15 is only required to be electrically connected to at least one of heater wire 11 and sensor wire 13. Detection unit 15 detects a change in electrostatic capacitance in at least one of heater wire 11 and sensor wire 13, and outputs a signal, which relates to gripping by a hand, to a control unit (not shown) of a vehicle. That is to say, when a driver grips grip 21 of steering wheel 70 and an electrostatic capacitance is accordingly changed, detection unit 15 measures the electrostatic capacitance, and converts it into a voltage. Then, when the voltage is a pre-set threshold or more, detection unit 15 outputs a signal indicating gripping by a hand to the control unit. Therefore, detection unit 15 has functions of measurement of electrostatic capacitance, conversion to a voltage, comparison with a threshold, outputting of a signal, and the like. In order to achieve such functions, detection unit 15 may be configured by an analog circuit in an entire part, or may be configured by a digital circuit in a part. Note here that the control unit carries out, for example, temperature control of heater wire 11.

Next, a case where electrostatic grip detection device 1 is incorporated into grip 21 of steering wheel 70 is described with reference to FIG. 2. Base material 17 is wrapped around grip 21 so that heater wire 11 and sensor wire 13 are disposed in grip 21. Then, base material 17 is incorporated into steering wheel 70. Therefore, a driver can warm the palm at sections in which heater wire 11 is disposed. Then, from a change in electrostatic capacitance between heater wire 11 and the palm, gripping of grip 21 by a driver is detected.

On the other hand, since sensor wire 13 is not heated, sensor wire 13 cannot warm the palm. However, gripping of grip 21 is detected based on the change in electrostatic capacitance between the wiring pattern of sensor wire 13 and the palm. One base material 17 is set in length corresponding to substantially half circumference of grip 21. Therefore, by disposing base materials 17 to the right half and the left half of grip 21, respectively, gripping can be detected on substantially entire circumference of grip 21.

With the above-mentioned configuration and operation, it is possible to obtain electrostatic grip detection device 1 capable of suppressing the increase of power consumption of heater wire 11, and detecting gripping around the entire circumference of grip 21. Furthermore, the wiring pattern of sensor wire 13 may be formed by the same technique as that for sewing electrode pattern of heater wire 11 into a non-woven fabric. This makes it possible to dispose heater wire 11 and sensor wire 13 on grip 21 simultaneously.

Note here that in the first exemplary embodiment, base material 17 is formed of two bodies, but it may be further subdivided. For example, base material 17 may be formed of four bodies each of which is provided with heater wire 11 and sensor wire 13. In this case, base material 17 is incorporated into grip 21 for each about 90° of grip 21. Such a configuration makes wiring complicated, but enables a gripped position to be sensed in more detail.

Furthermore, base material 17 may be one. In this case, since heater wire 11 and sensor wire 13 are sewed on one base material 17, a structure is simplified, but it becomes difficult to find a gripped position. Therefore, this is effective to find whether grip 21 is gripped by the hand regardless of positions.

Furthermore, base material 17 may be provided with a plurality of heater wires 11 and a plurality of sensor wires 13. Thus, a gripped position can be sensed by an integrated configuration.

### SECOND EXEMPLARY EMBODIMENT

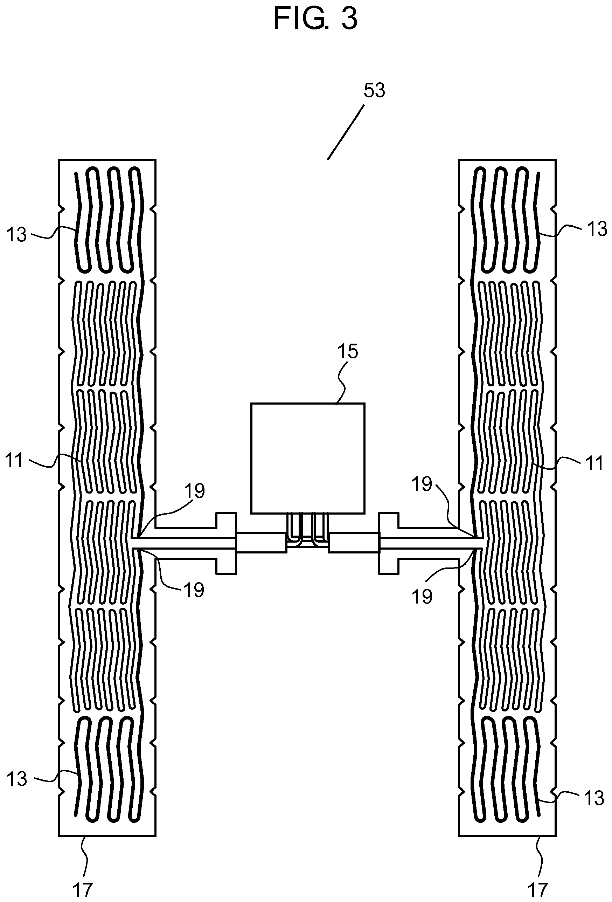

FIG. 3 is a schematic configuration view of electrostatic grip detection device 53 in accordance with a second exemplary embodiment. In the second exemplary embodiment, the same reference numerals are given to the same components as in the first exemplary embodiment, and the detailed description thereof is omitted.

Electrostatic grip detection device 53 is different from electrostatic grip detection device 1 in that the wiring pattern (the pattern density) of sensor wire 13 is different from the wiring pattern (the pattern density) of heater wire 11. With this configuration, a change in electrostatic capacitance when heater wire 11 is gripped and a change in electrostatic capacitance when sensor wire 13 is gripped can be adjusted to the same level. Since the change in electrostatic capacitance is related to the sensitivity, the sensitivity when heater wire 11 is gripped and the sensitivity when sensor wire 13 is gripped can be adjusted to the same level.

Hereinafter, electrostatic grip detection device 53 of the second exemplary embodiment is described in detail. Also in the second exemplary embodiment, similar to the first exemplary embodiment, sensor wire 13 is shown by a thick line.

In FIG. 3, the pattern density of sensor wires 13 is sparser than the pattern density of heater wire 11. When the pattern density of heater wire 11 is the same as that of sensor wire 13, since one end of sensor wire 13 is opened, parasitic capacitance of sensor wire 13 is smaller as compared with that of heater wire 11. Consequently, the sensitivity is higher in sensor wire 13. In electrostatic grip detection device 1 of the first exemplary embodiment, since the pattern density of heater wire 11 and the pattern density of sensor wire 13 are the same as each other, the sensitivity of sensor wire 13 is high. For only sensing whether grip 21 is gripped by a driver, a configuration of electrostatic grip detection device 1 may be suitable. However, for example, for measuring strength of electrostatic coupling in gripping, it is necessary to make the sensitivity of heater wire 11 and the sensitivity of sensor wire 13 substantially uniform. Thus, in electrostatic grip detection device 53 of the second exemplary embodiment, the pattern density of sensor wire 13 is made to be sparse so that the sensitivity of heater wire 11 and the sensitivity of sensor wire 13 are substantially equal to each other within an error range. With this configuration, a change in electrostatic capacitance received by detection unit 15 is substantially equal in the case where a driver grips heater wire 11 and in the case where the driver grips sensor wire 13 with the same force. As a result, the possibility that the circuit of detection unit 15 saturates is extremely small. Thus, electrostatic grip detection device 53 capable of detecting not only gripping of grip 21 but also strength of gripping is obtained.

With the above-mentioned configuration, it is possible to suppress the power consumption and to detect gripping around the entire circumference of grip 21. Furthermore, since the change in electrostatic capacitance (sensitivity) when heater wire 11 is gripped and the change in electrostatic capacitance (sensitivity) when sensor wire 13 is gripped are adjusted to the same level, the strength of gripping can be detected.

Note here that in the second exemplary embodiment, the wiring pattern (the pattern density) of sensor wire 13 is made sparser with respect to the wiring pattern (the pattern density) of heater wire 11. However, in some cases, it may be preferable that the configuration is reversed. That is to say, in some cases, the wiring pattern of heater wire 11 may be sparser with respect to the wiring pattern of sensor wire 13. When material and thickness of the surface of heater wire 11 and sensor wire 13 are different, the dielectric constant is different. Furthermore, the sensitivity may vary depending on the connection position between heater wire 11 and sensor wire 13. Therefore, depending on the configuration, the wiring pattern (pattern density) of sensor wire 13 may be appropriately made sparser or denser with respect to the wiring pattern (pattern density) of heater wire 11.

### THIRD EXEMPLARY EMBODIMENT

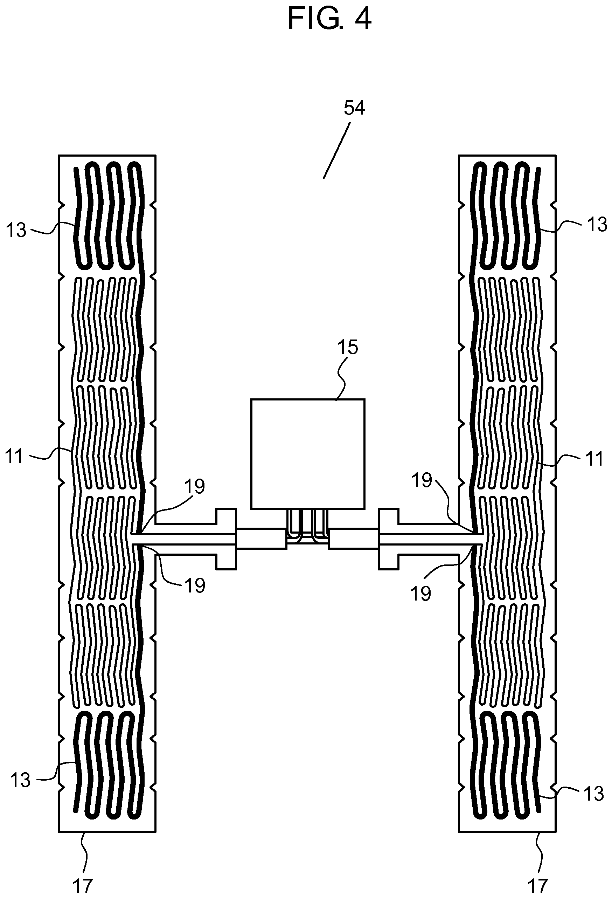

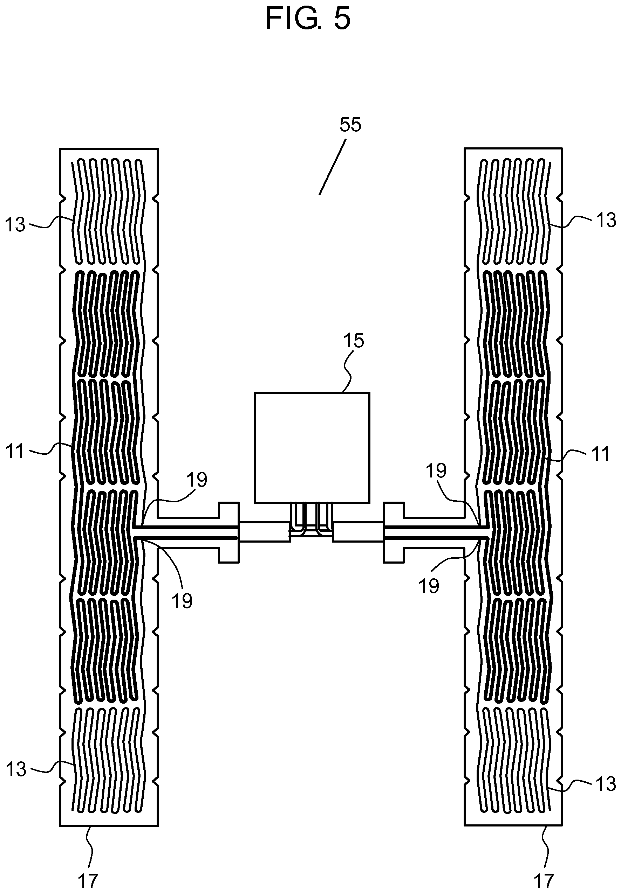

FIG. 4 is a schematic configuration view of electrostatic grip detection device 54 in accordance with a third exemplary embodiment. FIG. 5 is a schematic configuration view of another electrostatic grip detection device 55 in accordance with the third exemplary embodiment. In the third exemplary embodiment, the same reference numerals are given to the same configurations as those in the first exemplary embodiment, and detailed description thereof is omitted herein.

Electrostatic grip detection devices 54 and 55 are different from electrostatic grip detection device 1 in that a thickness (wire diameter) of sensor wire 13 is different from a thickness (wire diameter) of heater wire 11. Thus, the sensitivity when heater wire 11 is gripped and the sensitivity when sensor wire 13 is gripped can be made to be the same level depending on the thickness of sensor wire 13.

Hereinafter, electrostatic grip detection devices 54 and 55 of the third exemplary embodiment are described in detail. Note here that in FIG. 4, sensor wire 13 is shown by a thick line, and in FIG. 5, sensor wire 13 is shown by a thin line.

In FIG. 4, sensor wire 13 is thicker than heater wire 11. Since sensor wire 13 is thick, the radius of curvature at the time of bending becomes larger. As a result, the pattern density of sensor wire 13 is inevitably sparser than that of heater wire 11. Therefore, the sensitivity of heater wire 11 and the sensitivity sensor wire 13 are substantially equal to each other, thus enabling gripping including strength of gripping to be detected. In this way, the sensitivity may be adjusted by making sensor wire 13 thick.

In FIG. 5, sensor wire 13 is thinner than heater wire 11. Thus, for example, even when heater wire 11 and sensor wire 13 are disposed in materials having different dielectric constants, respectively, the sensitivity of heater wire 11 and the sensitivity of sensor wire 13 can be made substantially equal to each other by making sensor wire 13 thin. Since sensor wire 13 is thinner than heater wire 11, the degree of freedom in design of the pattern density is increased. Therefore, as mentioned above, even when materials having different dielectric constant are used, the sensitivity can be easily adjusted. Use of thin sensor wire 13 can reduce appearance of sensor wire 13 on the surface of grip 21.

As mentioned above, the third exemplary embodiment is based on the point that the sensitivity can be adjusted by changing the thicknesses of sensor wire 13 and heater wire 11. Furthermore, not only the thickness but also the pattern density may be changed. Herein, in order to increase the adjusting width of the sensitivity, it is desirable that both the thickness and the pattern density be adjusted. With the above-mentioned configuration, it is possible to suppress the power consumption and to detect gripping around the entire circumference of grip 21. Furthermore, a change in electrostatic capacitance (sensitivity) when heater wire 11 is gripped and a change in electrostatic capacitance (sensitivity) when sensor wire 13 is gripped can be adjusted to the same level.

### FOURTH EXEMPLARY EMBODIMENT

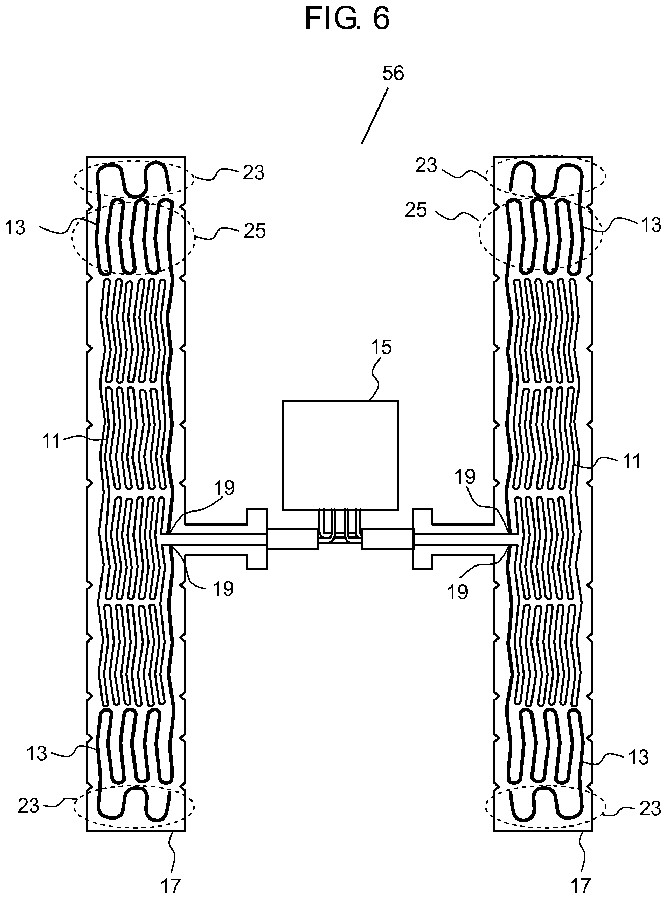

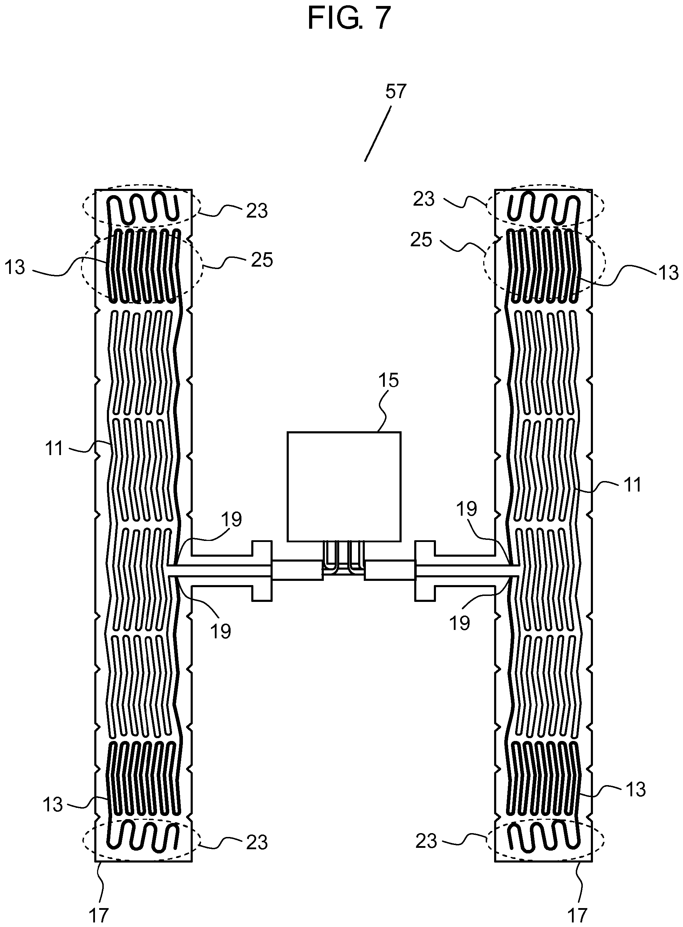

FIG. 6 is a schematic configuration view of electrostatic grip detection device 56 in accordance with a fourth exemplary embodiment. FIG. 7 is a schematic configuration view of another electrostatic grip detection device 57 in accordance with the fourth exemplary embodiment. In the fourth exemplary embodiment, the same reference numerals are given to the same components as in the first exemplary embodiment, and the detailed description thereof is omitted.

Electrostatic grip detection devices 56 and 57 are different from electrostatic grip detection device 1 in the following point. Sensor wire 13 includes a portion having sparse pattern density and a portion having dense pattern density. The portion having sparse pattern density includes an open portion of sensor wire 13, and the portion having dense pattern density is disposed between heater wire 11 and the portion having sparse pattern density of sensor wire 13.

That is to say, in electrostatic grip detection device 56, sensor wire 13 includes end portion 23 whose pattern density is sparse and intermediate portion 25 whose pattern density is sparser than that of heater wire 11 and denser than that of end portion 23. End portion 23 includes an open end of sensor wire 13, and intermediate portion 25 is disposed between heater wire 11 and end portion 23.

This configuration can compensate the increase of the sensitivity in end portion 23 of sensor wire 13. Consequently, even when a driver's hand is on end portion 23 of sensor wire 13, gripping by the driver can be detected more accurately. Note here that the reason why the sensitivity is increased at end portion 23 is because end portion 23 is opened and accordingly the parasitic capacitance becomes smaller than in heater wire 11.

Hereinafter, electrostatic grip detection devices 56 and 57 of the fourth exemplary embodiment are described in detail. In FIGs. 6 and 7, sensor wire 13 is shown by a thick line.

Firstly, electrostatic grip detection device 56 shown in FIG. 6 is described. In FIG. 6, the pattern density excluding that of end portion 23 is the same as that of electrostatic grip detection device 53 of the second exemplary embodiment. On the other hand, the pattern density of end portion 23 including an open portion of sensor wire 13 is sparse. When pattern density of sensor wire 13 is the same in all portions, the gripping sensitivity of grip 21 in end portion 23 is higher. In particular, the sensitivity becomes higher nearer the end portion 23 including the open portion. Therefore, in electrostatic grip detection device 56, the pattern density is made sparser in stages. When the pattern density is made sparser, the sensitivity is decreased. Therefore, with the configuration of electrostatic grip detection device 56, it is possible to suppress the difference in sensitivity depending on the position in which a driver grips grip 21. As a result, gripping by the driver can be detected more accurately.

Next, a configuration of electrostatic grip detection device 57 shown in FIG. 7 is described. In FIG. 7, the pattern density excluding that of end portion 23 is the same as in electrostatic grip detection device 1 of the first exemplary embodiment. On the other hand, in end portion 23 including the open portion of sensor wire 13, the pattern density is sparse.

That is to say, in electrostatic grip detection device 57, sensor wire 13 includes end portion 23 whose pattern density is sparse and intermediate portion 25 whose pattern density is denser than that of end portion 23. End portion 23 includes an open end of sensor wire 13, and intermediate portion 25 is disposed between heater wire 11 and end portion 23. The pattern density of intermediate portion 25 is the same as that of heater wire 11.

This configuration also makes it possible to suppress the difference in sensitivity depending on the position in which a driver grips grip 21. Therefore, it is possible to detect gripping by the driver accurately.

With the above-mentioned configuration, it is possible to suppress power consumption, and to detect gripping around the entire circumference of grip 21. Furthermore, even when a driver's hand is on end portion 23 of sensor wire 13, gripping of grip 21 by the driver can be detected accurately. Note here that a configuration having end portion 23 described in this exemplary embodiment may be applied to the configuration of the third exemplary embodiment.

### FIFTH EXEMPLARY EMBODIMENT

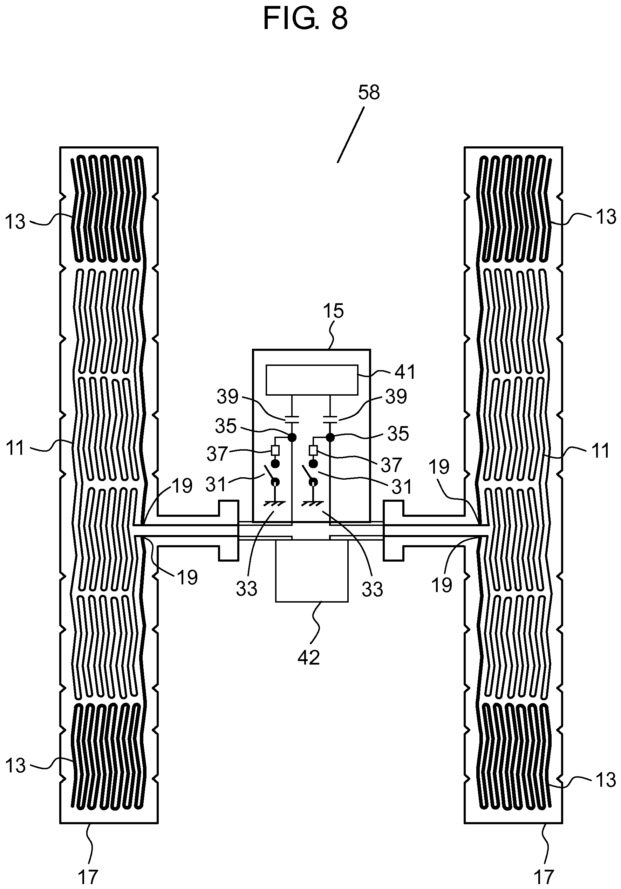

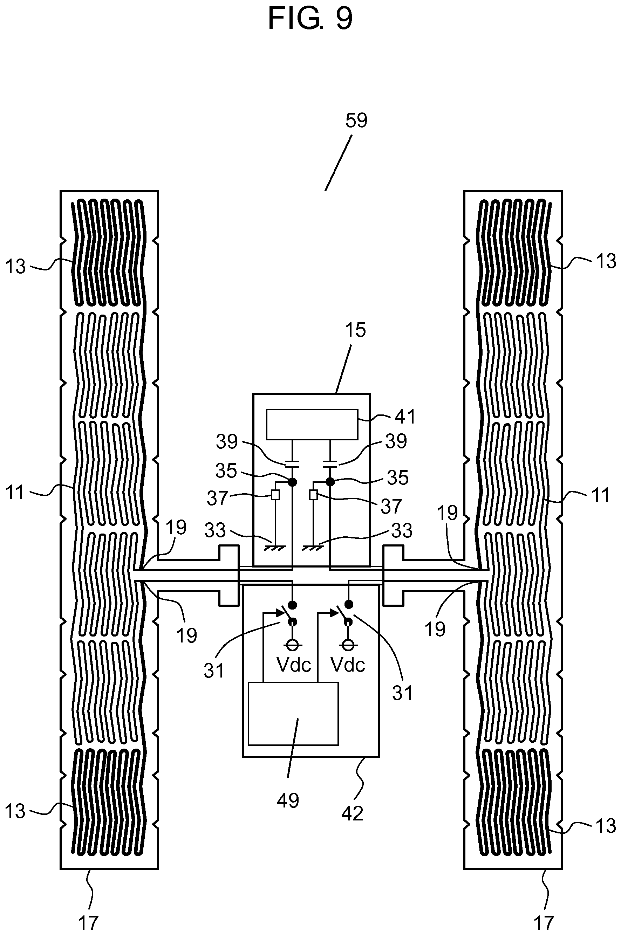

FIG. 8 is a schematic configuration view of an electrostatic grip detection device 58 in accordance with a fifth exemplary embodiment. FIG. 9 is a schematic configuration view of another electrostatic grip detection device 59 in accordance with the fifth exemplary embodiment. In the fifth exemplary embodiment, the same reference numerals are given to the same components as in the first exemplary embodiment, and the detailed description thereof is omitted.

In electrostatic grip detection device 58 shown in FIG. 8, detection unit 15 includes connection point 35, inductor 37, and detection circuit 41. Furthermore, detection unit 15 may have switch 31. Heater wire 11 is electrically connected to detection circuit 41 and inductor 37 via connection point 35. Inductor 37 is connectable to ground 33 by switch 31. That is to say, in electrostatic grip detection device 58, inductor 37 is provided between heater wire 11 and ground 33. Thus, influence of parasitic capacitance of switch 31 connected to heater wire 11 can be reduced. As a result, it is possible to improve a change amount of electrostatic capacitance (sensitivity) by contact of the hand.

Hereinafter, electrostatic grip detection device 58 of the fifth exemplary embodiment is described in detail.

The wiring pattern of heater wire 11 and the wiring pattern of sensor wire 13 in electrostatic grip detection device 58 are same as those in electrostatic grip detection device 1 of the first exemplary embodiment. Heater wire 11 is wired from root portion 19 to detection unit 15. It is wired in detection unit 15 as shown in FIG. 8. That is to say, heater wire 11 is electrically connected to a first end of switch 31 via connection point 35 and inductor 37. A second end of switch 31 is connected to ground 33. Note here that heater control unit 42 for applying a heater driving voltage is electrically connected to heater wire 11. Connection point 35 is also electrically connected to detection circuit 41 via capacitor 39. Detection circuit 41 detects gripping by the hand. Configurations other than the above are the same as those of electrostatic grip detection device 1 in the first exemplary embodiment.

Next, an operation of electrostatic grip detection device 58 is described.

Firstly, when gripping of grip 21 is detected when the heater is off, since switch 31 is off, the parasitic capacitance exists in parallel to electrostatic capacitance by the gripping by the hand seen from detection circuit 41. In particular, this influence is large when switch 31 is formed of semiconductor. However, since inductor 37 is connected to switch 31, the influence of the parasitic capacitance is reduced. Therefore, a change amount of the electrostatic capacitance (sensitivity) input into detection circuit 41 by the gripping of grip 21 is increased. Since the sensitivity is large, an error of detection in gripping of grip 21 is reduced.

Next, when the heater is on, detection circuit 41 is directly connected to ground 33 via switch 31. However, also in this case, presence of inductor 37 prevents a change of sensor output by gripping by the hand from being decreased.

As mentioned above, it is possible to obtain electrostatic grip detection device 58 having high sensitivity and less error.

Also in this configuration, it is possible to suppress power consumption, and to detect gripping around the entire circumference of grip 21.

With the above-mentioned configuration and operation, it is possible to obtain electrostatic grip detection device 58 which is capable of suppressing power consumption and detecting gripping around the entire circumference of grip 21, and has high sensitivity.

Note here that the position of switch 31 in the fifth exemplary embodiment is not limited to between inductor 37 and ground 33. As shown in FIG. 9, switch 31 may be formed between power supply terminal Vdc and heater wire 11. Furthermore, inductor 37 may be added between switch 31 and heater wire 11. On-off control of switch 31 is carried out by heater control circuit 49. In electrostatic grip detection device 59 of FIG. 9, heater control unit 42 includes switch 31 and heater control circuit 49. Also in this configuration, for the same reason mentioned above, it is possible to obtain electrostatic grip detection device 59 which is capable of suppressing power consumption and detecting gripping around the entire circumference of grip 21, and has high sensitivity.

Note here that the configuration of the fifth exemplary embodiment may be applied to the second to fourth exemplary embodiments.

### SIXTH EXEMPLARY EMBODIMENT

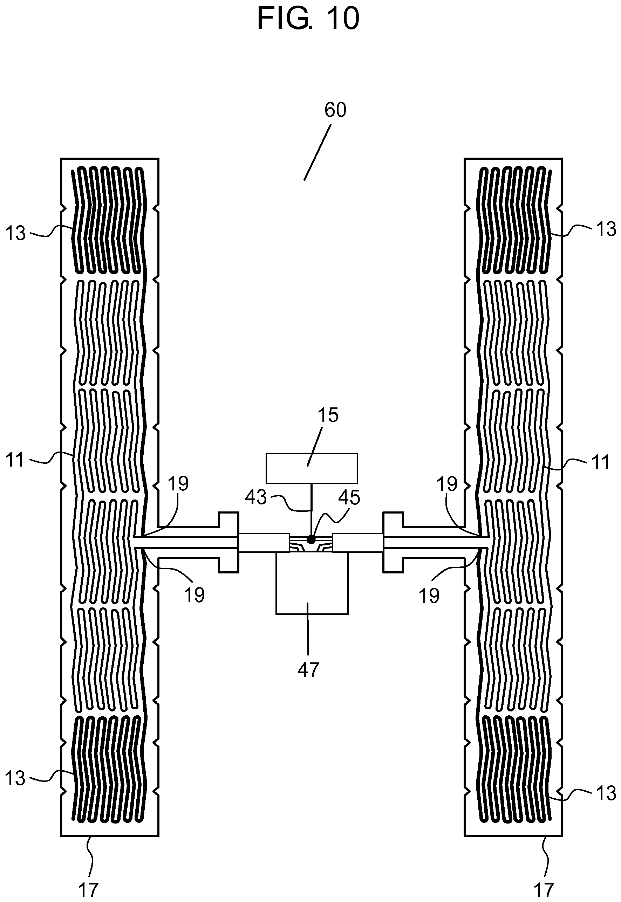

FIG. 10 is a schematic configuration view of electrostatic grip detection device 60 in accordance with a sixth exemplary embodiment. In the sixth exemplary embodiment, the same reference numerals are given to the same components as in the first exemplary embodiment, and the detailed description thereof is omitted.

Electrostatic grip detection device 60 includes base material 17, heater wire 11, sensor wire 13, lead wire 43, and detection unit 15. Electrostatic grip detection device 60 may have heater control unit 47. Base material 17 including heater wire 11 and sensor wire 13 is incorporated in grip 21 (see FIG. 2). Sensor wire 13 is drawn out from heater wire 11 and has one end opened. Lead wire 43 is electrically connected to heater wire 11. Detection unit 15 is electrically connected to lead wire 43, and detects gripping of grip 21 based on a change in electrostatic capacitance of at least one of heater wire 11 and sensor wire 13.

The above-mentioned configuration makes it possible to suppress power consumption and to detect gripping around the entire circumference of the grip. Furthermore, since a part of heater wire 11 plays a role of an inductor, it is possible to reduce influence of parasitic capacitance of a switch without adding an inductor. Thus, electrostatic grip detection device 60 having high sensitivity can be obtained.

Hereinafter, electrostatic grip detection device 60 of the sixth exemplary embodiment is described in detail.

In electrostatic grip detection device 60, left and right heater wires 11 are connected in series. Series-connection point 45 and lead wire 43 are electrically connected to each other. Lead wire 43 is electrically connected to detection unit 15. Both ends of heater wire 11 connected in series are electrically connected to heater control unit 47. Heater control unit 47 includes a voltage source for driving heater wire 11, and a ground. A heater electric current output from heater control unit 47 returns to heater control unit 47 via left and right heater wires 11. Furthermore, detection unit 15 or heater control unit 47 has a switch.

Next, an operation of electrostatic grip detection device 60 is described. In the sixth exemplary embodiment, a signal indicating a change in electrostatic capacitance is input to detection unit 15 through lead wire 43. Herein, heater wire 11 from series-connection point 45 to the ground in heater control unit 47 has an inductor component. Therefore, as described in the fifth exemplary embodiment, when the switch is off, although parasitic capacitance is present, the influence of the parasitic capacitance can be reduced by an inductor formed of heater wire 11. As a result, electrostatic grip detection device 60 which is capable of increasing the sensitivity and has less error can be obtained.

Note here that when the switch is on, detection circuit 41 is directly connected to the ground via the switch. However, also in this case, the inductor formed of heater wire 11 can prevent a change of sensor output by gripping by the hand from being decreased.

As mentioned above, it is possible to obtain electrostatic grip detection device 60 having high sensitivity and less error even without additionally providing inductor 37.

Note here that the configurations of heater wire 11 and sensor wire 13 of FIG. 10 are the same as those in the first exemplary embodiment. Electrostatic grip detection device 60 of this exemplary embodiment can also suppress power consumption, and detect gripping around the entire circumference of grip 21.

With the above-mentioned configuration and operation, it is possible to obtain electrostatic grip detection device 60 which is capable of suppressing power consumption and detecting gripping around the entire circumference of grip 21, and has high sensitivity even without additionally providing an inductor.

Note here that in the sixth exemplary embodiment, lead wire 43 is connected to series-connection point 45, but lead wire 43 may be connected to any places of heater wire 11. However, when lead wire 43 is connected in the vicinity of the ground or the voltage source, the value of inductance formed by heater wire 11 becomes small, so that the amount parasitic capacitance to be reduced becomes small. Therefore, it is desirable that lead wire 43 be formed in a position distant from the ground and the voltage source.

Furthermore, the configuration of the sixth exemplary embodiment may be applied to the second to fourth exemplary embodiments. Also in this case, the same effect of the sixth exemplary embodiment can be obtained.

Furthermore, in the second to sixth exemplary embodiments, base material 17 is divided into two bodies, as mentioned in the first exemplary embodiment, base material 17 may be formed in one unit or may be divided into three or more bodies.

Furthermore, the first to sixth exemplary embodiments describe a configuration in which heater wire 11 and sensor wire 13 are sewed on non-woven fabric as base material 17. However, the present invention is not limited to this configuration. For example, heater wire 11 and sensor wire 13 may be formed by printing a conductive substance, a resistor, or the like, on a resin substrate having flexibility. Such a configuration facilitates formation of heater wire 11 and sensor wire 13. Furthermore, in such a configuration, the thickness or width of the wire may be varied.

According to the electrostatic grip detection device of present disclosure, since one end of the sensor wire is opened, an electric current (heater electric current) does not flow into the sensor wire. Consequently, the power consumption can be suppressed. Furthermore, the sensor wire operates as an electrode pattern for detecting a change in electrostatic capacitance. Thus, it is possible to obtain an electrostatic grip detection device capable of suppressing power consumption and detecting gripping around the entire circumference of the grip. Furthermore, the sensor wire can be formed simultaneously by the same technique as that for the electrode pattern of the heater wire.

### INDUSTRIAL APPLICABILITY

An electrostatic grip detection device according to the present disclosure can suppress power consumption, and detect gripping around the entire circumference of a grip of a steering wheel. Therefore, in particular, the electrostatic grip detection device is useful for a vehicle, and the like.

### REFERENCE MARKS IN THE DRAWINGS

- 1, 53, 54, 55, 56, 57, 58, 59, 60: electrostatic grip detection device
- 11: heater wire
- 13: sensor wire
- 15: detection unit
- 17: base material
- 19: root portion
- 21: grip
- 23: end portion
- 25: intermediate portion
- 31: switch
- 33: ground
- 37: inductor
- 39: capacitor
- 42: heater control unit
- 43: lead wire
- 47: heater control unit
- 49: heater control circuit
- 70: steering wheel
- 74: spoke
- 76: center portion

## Claims

1. An electrostatic grip detection device comprising:
a base material (17);
a heater wire (11) formed in the base material (17);
**characterized in that** it comprises
a sensor wire (13) formed in the base material (17), and having a first end electrically connected to the heater wire (11) directly and a second end opened, for drawing out the sensor wire (13) from the heater wire (11); and
a detection unit (15) electrically connected to at least one of the heater wire (11) and the sensor wire (13), and sensing a change in electrostatic capacitance of at least one of the heater wire (11) and the sensor wire (13).

2. The electrostatic grip detection device of claim 1, wherein a pattern density of the sensor wire (13) is different from a pattern density of the heater wire (11).

3. The electrostatic grip detection device of claim 2, wherein the pattern density of the sensor wire (13) is sparser than the pattern density of the heater wire (11).

4. The electrostatic grip detection device of claim 1, wherein
the sensor wire (13) includes:
an end portion (23) whose pattern density is sparse; and
an intermediate portion (25) whose pattern density is denser than the pattern density of the end portion, and
the end portion (23) includes the second end of the sensor wire (13), and
the intermediate portion (25) is disposed between the heater wire (11) and the end portion (23).

5. The electrostatic grip detection device of claim 4, wherein the pattern density of the intermediate portion (25) is sparser than a pattern density of the heater wire (11).

6. The electrostatic grip detection device of claim 1, wherein the sensor wire (13) and the heater wire (11) have different thicknesses.

7. The electrostatic grip detection device of claim 6, wherein the sensor wire (13) is thicker than the heater wire (11).

8. The electrostatic grip detection device of claim 6, wherein the sensor wire (13) is thinner than the heater wire (11).

9. The electrostatic grip detection device of claim 1, wherein
the detection unit (15) includes a connection point (35), an inductor (37), and a detection circuit (41),
the heater wire (11) is electrically connected to the detection circuit (41) and the inductor (37) via the connection point (35), and
the inductor (37) is connectable to a ground (33).

10. The electrostatic grip detection device of claim 1, wherein the base material (17) is disposed on an entire circumference of a grip of a steering wheel.

## Patentansprüche

1. Elektrostatische Griffdetektionsvorrichtung, die Folgendes umfasst:
ein Basismaterial (17);
einen Heizdraht (11), der im Basismaterial (17) gebildet ist;
**dadurch gekennzeichnet, dass** sie Folgendes umfasst
einen Sensordraht (13), der im Basismaterial (17) gebildet ist und ein erstes Ende, das mit dem Heizdraht (11) direkt elektrisch verbunden ist, und ein zweites Ende, das zum Herausziehen des Sensordrahts (13) vom Heizdraht (11) geöffnet ist, aufweist; und
eine Detektionseinheit (15), die mit mindestens einem des Heizdrahts (11) und des Sensordrahts (13) elektrisch verbunden ist und eine Änderung bei der elektrostatischen Kapazität von mindestens einem des Heizdrahts (11) und des Sensordrahts (13) erfasst.

2. Elektrostatische Griffdetektionsvorrichtung nach Anspruch 1, wobei sich eine Strukturdichte des Sensordrahts (13) von einer Strukturdichte des Heizdrahts (11) unterscheidet.

3. Elektrostatische Griffdetektionsvorrichtung nach Anspruch 2, wobei die Strukturdichte des Sensordrahts (13) geringer ist als die Strukturdichte des Heizdrahts (11).

4. Elektrostatische Griffdetektionsvorrichtung nach Anspruch 1, wobei
der Sensordraht (13) Folgendes beinhaltet:
einen Endabschnitt (23), dessen Strukturdichte gering ist; und
einen Zwischenabschnitt (25), dessen Strukturdichte dichter ist als die Strukturdichte des Endabschnitts, und
der Endabschnitt (23) das zweite Ende des Sensordrahts (13) beinhaltet und
der Zwischenabschnitt (25) zwischen dem Heizdraht (11) und dem Endabschnitt (23) angeordnet ist.

5. Elektrostatische Griffdetektionsvorrichtung nach Anspruch 4, wobei die Strukturdichte des Zwischenabschnitts (25) geringer ist als eine Strukturdichte des Heizdrahts (11).

6. Elektrostatische Griffdetektionsvorrichtung nach Anspruch 1, wobei der Sensordraht (13) und der Heizdraht (11) unterschiedliche Dicken aufweisen.

7. Elektrostatische Griffdetektionsvorrichtung nach Anspruch 6, wobei der Sensordraht (13) dicker ist als der Heizdraht (11).

8. Elektrostatische Griffdetektionsvorrichtung nach Anspruch 6, wobei der Sensordraht (13) dünner ist als der Heizdraht (11).

9. Elektrostatische Griffdetektionsvorrichtung nach Anspruch 1, wobei
die Detektionseinheit (15) einen Verbindungspunkt (35), einen Induktor (37) und eine Detektionsschaltung (41) beinhaltet,
der Heizdraht (11) via den Verbindungspunkt (35) mit der Detektionsschaltung (41) und dem Induktor (37) elektrisch verbunden ist, und
der Induktor (37) mit einer Masse (33) verbindbar ist.

10. Elektrostatische Griffdetektionsvorrichtung nach Anspruch 1, wobei das Basismaterial (17) auf einem gesamten Umfang eines Griffs eines Lenkrads angeordnet ist.

## Revendications

1. Dispositif de détection de préhension électrostatique qui comprend :
un matériau de base (17) ;
un fil chauffant (11) formé dans le matériau de base (17) ;
**caractérisé en ce qu'**il comprend :
un fil de détection (13) formé dans le matériau de base (17), et qui a une première extrémité connectée électriquement au fil chauffant (11) directement et une deuxième extrémité ouverte, pour séparer le fil de détection (13) du fil chauffant (11) ; et
une unité de détection (15) connectée électriquement à au moins l'un du fil chauffant (11) et du fil de détection (13), et qui détecte un changement de la capacitance électrostatique d'au moins l'un du fil chauffant (11) et du fil de détection (13) .

2. Dispositif de détection de préhension électrostatique selon la revendication 1, dans lequel une densité de motif du fil de détection (13) est différente d'une densité de motif du fil chauffant (11).

3. Dispositif de détection de préhension électrostatique selon la revendication 2, dans lequel la densité de motif du fil de détection (13) est inférieure à la densité de motif du fil chauffant (11).

4. Dispositif de détection de préhension électrostatique selon la revendication 1, dans lequel
le fil de détection (13) comprend :
une partie d'extrémité (23) dont la densité de motif est faible ; et
une partie intermédiaire (25) dont la densité de motif est supérieure à la densité de motif de la partie d'extrémité, et
la partie d'extrémité (23) comprend la deuxième extrémité du fil de détection (13), et
la partie intermédiaire (25) est disposée entre le fil chauffant (11) et la partie d'extrémité (23).

5. Dispositif de détection de préhension électrostatique selon la revendication 4, dans lequel la densité de motif de la partie intermédiaire (25) est inférieure à une densité de motif du fil chauffant (11).

6. Dispositif de détection de préhension électrostatique selon la revendication 1, dans lequel le fil de détection (13) et le fil chauffant (11) ont différentes épaisseurs.

7. Dispositif de détection de préhension électrostatique selon la revendication 6, dans lequel le fil de détection (13) est plus épais que le fil chauffant (11).

8. Dispositif de détection de préhension électrostatique selon la revendication 6, dans lequel le fil de détection (13) est plus fin que le fil chauffant (11).

9. Dispositif de détection de préhension électrostatique selon la revendication 1, dans lequel
l'unité de détection (15) comprend un point de connexion (35), une inductance (37), et un circuit de détection (41),
le fil chauffant (11) est connecté électriquement au circuit de détection (41) et à l'inductance (37) par l'intermédiaire du point de connexion (35), et
l'inductance (37) peut être connectée à une masse (33).

10. Dispositif de détection de préhension électrostatique selon la revendication 1, dans lequel le matériau de base (17) est disposé sur une circonférence entière d'une partie de préhension d'un volant.
